# EUROPEAN PATENT SPECIFICATION

(11) **EP 0 927 404 B1**
(45) Date of publication and mention of the grant of the patent: **29.03.2006**
(21) Application number: 98919463.4
(22) Date of filing: 22.04.1998
(51) Int. Cl.: G06F 3/033

(54) **ECOLOGICAL MULTISURFACE MULTI-IMAGE WITH DISPOSABLE LAYERS COMPUTER MOUSE PAD**
ÖKOLOGISCHE UNTERLAGE FÜR COMPUTER-MAUS BESTEHEND AUS MIT MEHREREN BILDEN BEDRUCKTEN LEICHT ZU ENTSORGENDEN SCHICHTEN
TAPIS RECYCLABLE A PLUSIEURS SURFACES ET A PLUSIEURS IMAGES, COMPOSE DE COUCHES JETABLES, POUR SOURIS D'ORDINATEUR

(30) Priority: 24.04.1997 IT RM970083 U
(43) Date of publication of application: 07.07.1999
(73) Proprietor: Asterisco S.R.L., 00124 Rome (IT)
(72) Inventor: MORABITO, Antonio, I-00124 Rome (IT); MORABITO, Gennaro, I-00124 Rome (IT)
(74) Representative: Sarpi, Maurizio
(86) International application number: PCT/IT1998/000095
(87) International publication number: WO 1998/048375

(56) References cited:
- DE-U- 9 401 196
- DE-U- 9 416 045
- DE-U- 29 512 079
- DE-U- 29 715 302
- GB-A- 2 289 520
- GB-A- 2 307 445
- PATENT ABSTRACTS OF JAPAN vol. 018, no. 085 (P-1691), 10 February 1994 & JP 05 289810 A (NISSHIN KOKI KK), 5 November 1993

## Description

### Technical Field

This invention relates to the field of computer mouse pads, and particularly to a computer mouse pad which consist of a top layer made of a series of single, disposable, ecological sheets fastened together in a block, that provide a surface printed with graphics, photo and texts, which may particularly be used for advertising and educational purposes, and a base made of a plurality of ecological cardboards glued to one other along one side that confer more stiffness to the product.

### Background Art

In the past, computer mouse pads were usually made with two layers: a base and a top layer. The base layer is generally made of rubber, providing an anti-slip property, and on top of this, a surface, either of plastic or cloth, where the computer mouse is moved across, where, photos, graphics can be printed.

A problem with this kind of mouse pads is that are not biodegradable, with obvious negative consequences for the enviroment.

Another problem is that their rubber has a smell that is often disagreable.

A further problem is that all mouse pads become dirty with use, and consequentially transfer dirt, grease, dust, and grime to the mouse mechanism itself, impairing its function, and causing frustration to the user. Mouse pads with cloth surfaces are difficult to clean, while ones with plastic surfaces may be cleaned easily but quickly re-accumulate dust and grime. Very often when the user discovers it is time to clean his mouse pad, the whole mouse mechanism, including track ball and contacts, must also be cleaned before using it again. For professional or heavy computer user, this can be very frustrating and a waste of precious time.

Another drawback with mouse pads is that they have only one surface available for customization with photos, graphics, and logos, offering limited space for advertising or personalized images.

To overcome these problems, recently mouse pads of multilayer sheets were described. For istance DE-A-9416045 and DE-A-9401196 both describe mouse pads made of multilayer sheets, preferably of paper, fastened together in a block of sheets with glue or other binding preparations in a manner that they can be detached individually, wherein the paper has to be not-glazed writing paper or natural paper, such as to show a roughness sufficient to enable the mouse to roll. However the suggestion is to use rough paper to ensure a sufficient friction with the mouse ball, without solving the problem to clean the mouse dirt, grime or grease.

Therefore it would be an advancement in mouse pads art to provide a mouse pad which is ecological, functional and an attractive advertising and communication tool, consisting of a block of several individual sheets, of printable ecological paper, detachable each other, wherein each sheet provides a porous disposable surface where the mouse track ball can operate correctly, and which absorbs the grease, grime and dirt that accumulate daily, leaving the mechanism of the computer mouse clean and functioning properly, retaining precision pointer movements. When the sheet becomes dirty, it may be detached and discarded, once a week or month, at the discretion of the user. When the sheet is detached, the user will find a new clean functional surface for his mouse, and a new colorful advertising image, graphic, message, etc., each one different from the next, to brighten up his work space. Therefore it is an object of this invention to provide a computer mouse pad which is also an effective advertising tool among computer user.

Another object of this invention is to provide an ecological multisurface computer mouse pad which provides a base of ecological card board that confers more stiffness to the product.

A further object of this invention is to provide an ecological multisurface computer mouse pad which provides a base that with a special printing technique, on the surface of the card board facing the user desk, confers antislip properties to the product assuring greater respect for the environment.

### Disclosure of Invention

The present invention provide a mouse pad which is ecological, functional and an attractive new advertising and communication tool (The ecological multisurface computer mouse pad includes several sheets) consisting of a block of several printable ecological paper sheets, and a base of ecological card board sheets and a manner for fastening the several sheets together. Each of the sheets provide an ecological porous surface where images, graphics, advertisements, calendars, etc. are printed, where the computer mouse can operate correctly and where grease, grime and dirt that accumulate daily can be absorbed.

The present invention provide an ecological multisurface computer mouse pad which includes also an ecological antislip card board base.

### Brief Description of Drawings

Other objects and many of the attendant advantages of this invention will be readly appreciated as the same becomes better understood by reference to the following detailed description when considered in connection with the accompanying drawings, in which like reference numerals designate like parts throughout the figures thereof and wherein:
**FIG. 1** illustrates a perspective front view of a preferred embodiment of the ecological multisurface computer mouse pad.
**FIG. 2** illustrates a side view of the ecological multisurface computer mouse pad.
**FIG. 3** illustrates a top front view of the ecological multisurface computer mouse pad.
**FiG. 4** illustrates a bottom front view of the ecological multisurface computer mouse pad.

### Best Mode for Carrying Out the Invention

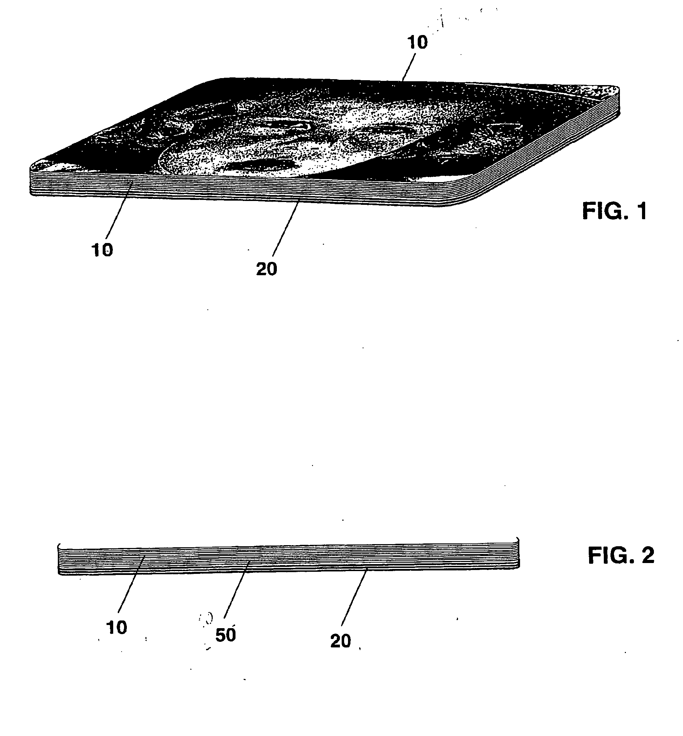

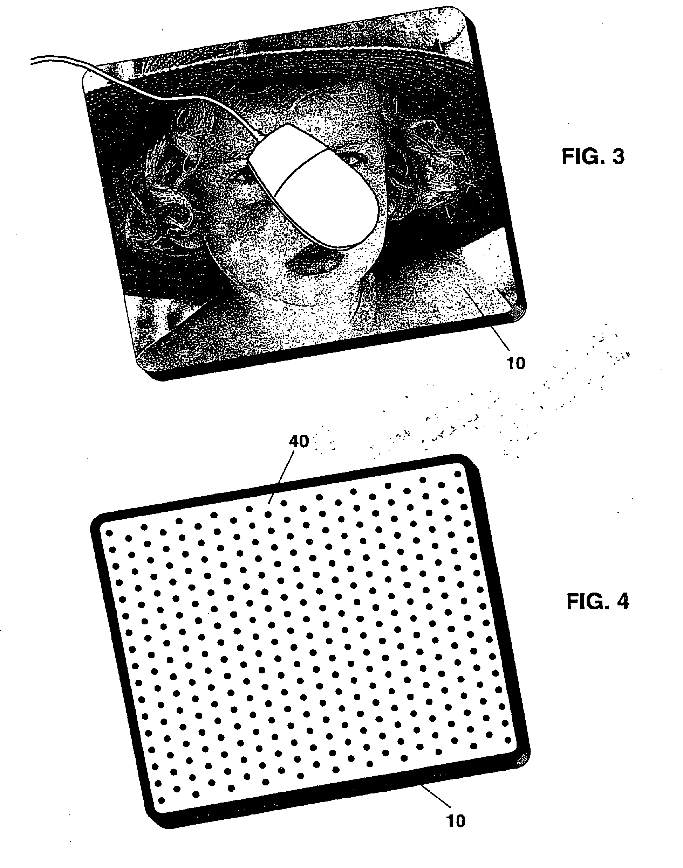

Referring to **FIG.1** and **FIG.2** which respectively show a perspective view and a side view of the preferred embodiment of the ecological multisurface computer mouse pad, can be seen **10** the plurality of ecological paper sheets on which images are printed. In the preferred embodiment the ecological paper sheets **10,** originally of the size of 70 by 100 cm. and a weight of 135 g/m², are first printed, **FIG. 3** with images, advertisings etc., in a four-color process with offset press and then shaped with an hollow-punch; the shaped sheets are then collected together, superimposed to the base **20,** aligned and bound among them and among the base by a thin coat of liquid glue in one of the opposing sides in a manner to allow an easy detach of each sheet from the other, one by one, without leavings of glue. The base **20** is made of a plurality of ecological cardboards, originally of the size of 70 by 100 cm. and a weight of 380 g/m², shaped with an hollow-punch like the other sheets **10.** In the preferred embodiment the base **20** provides the mouse pad with stiffness; the base **20** is made of a plurality of ecological thin boards, (380g/m²), instead of a single thicker cardboard because in this way is sufficient to apply a fewer quantity of glue on the side 30 to keep the plurality of sheets 10 and the base 20 fasten together. The first of the ecological base sheets 40 (FIG. 4) is spots printed (40% of the area) on one surface with a special antislip silk-screening ink.

While a preferred embodiment of the weight of ecological paper has been described, it will be understood that it is not intended to limit the weight and the type of ecological paper used.

While a preferred embodiment of the type of glue has been described for fastening the sheets together, it will be understood that it is not intended to limit the type of alternate securing means. The securing means must allow the separation of each sheet individually without living sticky residue to the inferior surface.

While a preferred embodiment of the type of printing means have been described, it will be also understood that it is not intended to limit the type of printing means and the numbers of colours used.

While the preferred size of the sheets of the ecological multisurface computer mouse pad is 22 cm by 18,5 cm, and the radius of the angles is10 mm, it will be understood that it is not intended to limit the sizes and the shapes of the sheets.

Further in the described embodiment the plurality of sheets 10 are 30, and the plurality of bases 20 are 4, this is not intended to limit the number of sheets used.

While a preferred embodiment has been shown and described, it will be understood that it is not intended to limit the disclosure, but rather it is intended to cover all modifications and alternate methods falling within the scope of the invention.

## Claims

1. Ecological computer mouse pad wherein a plurality of detacheable sheets each one printed with different decorative and/or informative images, each sheet having a porous surface which absorb grease, grime, dust and dirt that accumulate daily and leaving the mechanism of the computer mouse clean and functioning properly retaining precision pointer movements, are arranged on an antislip base, said plurality of porous sheets being glued therebetween and to a base along the same side thereof for allowing to be teared out of the multisheet pad,
**characterised in that**:
the base, on which said plurality sheets is arranged, consists of a plurality of cardboard sheets glued to one other along one side,

2. Ecological computer mouse pad according to claim 1 wherein the sheets are first printed with graphics and or images and or advertising and or calendar, and then shaped, superimposed and secured together.

3. Ecological computer mouse pad according to claim 1 wherein the plurality of cardboard sheets has the surface in conctat with the computer desk which is treated with antislip means.

4. Ecological computer mouse pad according to claim 3 wherein said antislip means are spots which are printed with an antislip silk-screening ink.

## Patentansprüche

1. Ökologisches Computermauspad, wobei auf einer rutschfesten Unterlage eine Vielzahl von ablösbaren Flächenkörpern angeordnet sind, von denen jeder mit anderen dekorativen und/oder informativen Bildern bedruckt ist, jeder Flächenkörper eine poröse Oberfläche hat, die Fett, Dreck, Staub und Schmutz absorbiert, die sich täglich ansammeln, und durch die der Mechanismus der Computermaus sauber bleibt und ordnungsgemäß funktioniert, wobei präzise Zeigerbewegungen beibehalten werden,
wobei die Vielzahl von porösen Flächenkörpern untereinander und mit einer Basis entlang der gleichen Seite davon verleimt sind, um zuzulassen, dass sie aus dem Vielfach-Flächenkötpetpad herausgerissen werden,
**dadurch gekennzeichnet, dass**
die Basis, auf der die Vielzahl von Flächenkörpern angeordnet sind, aus einer Vielzahl von Flächetikörpern aus Pappe besteht, die entlang einer Seite miteinander verleimt sind.

2. Ökologisches Computermauspad nach Anspruch 1, wobei die Flächenkörper zunächst mit grafischen Darstellungen und/oder Bildern und/oder Werbung und/oder einem Kalender bedruckt und dann geformt, übereinander angelegt und aneinander befestigt werden.

3. Ökologisches Computermauspad nach Anspruch 1, wobei diejenige Oberfläche der Vielzahl von Flächenkörpern aus Pappe, die mit einem Antirutschmittel behandelt ist, mit dem Computertisch in Kontakt ist.

4. Ökologisches Computermauspad nach Anspruch 3, wobei die Antirutschmittel Pünktchen sind, die mit einer Antirutsch-Siebdruckfarbe aufgedruckt sind.

## Revendications

1. Tapis recyclable pour souris d'ordinateur dans lequel une pluralité de feuilles détachables sont agencées sur une base antidérapante, chacune de ces feuilles étant imprimées de différentes images décoratives et/ou informatives, chaque feuille ayant une surface poreuse qui absorbe la graisse, la saleté, la poussière et les impuretés s'accumulant quotidiennement, qui laisse le mécanisme de la souris d'ordinateur propre et d'un fonctionnement correct, et qui retient avec précision les mouvements du pointeur, ladite pluralité de feuilles poreuses étant collées les unes aux autres et sur une base sur le même côté de celles-ci ce qui leur permet d'être détachées du tapis, **caractérisé en ce que** :
la base, sur laquelle ladite pluralité de feuilles est agencée, se compose d'une pluralité de feuilles de carton qui sont collées les unes aux autres sur un côté de celles-ci.

2. Tapis recyclable pour souris d'ordinateur selon la revendication 1 dans lequel les feuilles sont tout d'abord imprimées avec des graphiques et/ou des images et/ou des publicités et/ou un calendrier, puis formées, superposées et fixées les unes aux autres.

3. Tapis recyclable pour souris d'ordinateur selon la revendication 1 dans lequel la surface de la pluralité de feuilles de carton qui est en contact avec le bureau de l'ordinateur, est traitée avec des moyens antidérapants.

4. Tapis recyclable pour souris d'ordinateur selon la revendication 3 dans lequel lesdits moyens antidérapants sont des points qui sont imprimés avec une encre antidérapante pour sérigraphie.
